# EUROPEAN PATENT SPECIFICATION

(11) **EP 3 175 700 B1**
(45) Date of publication and mention of the grant of the patent: **17.10.2018**
(21) Application number: 16150006.1
(22) Date of filing: 04.01.2016
(51) Int. Cl.: A01D 46/00, A01G 3/08, A01G 3/025, A01D 46/253

(54) **REMOTELY CONTROLLED DEVICE TO COLLECT SAMPLES FROM TREE CANOPIES**
FERNGESTEUERTE VORRICHTUNG ZUM SAMMELN VON PROBEN AUS BAUMKRONEN
DISPOSITIF TÉLÉCOMMANDÉ POUR COLLECTER DES ÉCHANTILLONS DE CANOPÉES D'ARBRES

(30) Priority: 02.12.2015 SI 201500288
(43) Date of publication of application: 07.06.2017
(73) Proprietor: Gozdarski institut Slovenije, 1000 Ljubljana (SI); Zavod 404 - Zasebni zavod za raziskave, Razvoj in inovacije Ljubljana, 1000 Ljubljana (SI)
(72) Inventor: Bajc, Marko, 1222 Trojane (SI); Finzgar, Domen, 1231 Crnuce (SI); Brezovar, Jernej, 1000 Ljubljana (SI); Capuder, Rok, 1233 Dob (SI); Kladnik, Andraz, 1235 Radomlje (SI)
(74) Representative: Ivancic, Bojan

(56) References cited:
- EP-A1- 2 460 399
- CN-A- 103 846 501
- US-A- 4 566 188

## Description

The present invention refers to a remote controlled device to collect samples from tree canopies such as branches, fruits, seeds and similar, comprising a sample collection unit associated with an unmanned aerial vehicle.

Sampling which includes forest seed production, genetics, phytopathology, physiology, botany and dendrology is commonly carried out by climbing a tree, shooting off a branch or cutting down a tree where a sample is to be collected from, which is rather an unacceptable method.

The patent document No. US 4,566,188 for example discloses a power saw pruning device which utilizes a conventional saber saw for pruning trees. The device includes an elongated pole handle and a base adaptor carried on one end of the elongated pole handle. An elongated slot is formed in the base for receiving a blade of the saber saw therethrough. By hanging the device on a tree limb to be cut, an operator may move to a remote position and operate the power saw by a switch. After the tree limb is cut through, the device remains suspended on a stump of the tree limb which has been cut. After the limb has fallen to the ground the operator may remove the device from the stump.

In addition, a solution is known where the branch to be sampled from the tree canopy is cut off by a special hook shaped blade hanging from an unmanned aerial vehicle. A person controlling said aerial vehicle takes care for the hook shaped blade to hook a branch and afterwards the aerial vehicle is to be moved in the proper direction in order for the branch to get stuck in said blade and cut off. Thus, said sampling is carried out randomly and with an inaccurate cut. In addition, such a sampling is not appropriate for work in a dense forest, since in the instance when the blade cuts off the branch the latter is released from the canopy, and the traction cutting force causes the unmanned aerial vehicle to be moved uncontrolled in the traction direction, thus, hitting the canopy. In case the branch to be cut is to thick, the hook shaped blade stuck and, consequently, the unmanned aerial vehicle is stranded in the tree canopy.

It is the object of the present invention to create a remotely controlled device to collect samples from tree canopies such as branches, fruits, seeds and similar, comprising a sample collection unit associated with an unmanned aerial vehicle, which remedies drawbacks of the known solutions.

According to the present invention, the object as set above is solved by a remotely controlled device to collect samples from tree canopies such as branches, fruits, seeds and similar, comprising a sample collection unit associated with an unmanned aerial vehicle. Said sample collection device comprises a holding rod to the first end thereof there is attached a connecting unit to connect said holding rod with an unmanned aerial vehicle. To the opposite end of said holding rod there is attached a working unit comprising at least one tool for collecting samples form a tree canopy. According to the invention, said device further comprises a means for video controlling the operation of said device, a means for power supply, a sending/receiving means for communication between said device and a person which controls the device, at least one measuring means and a control unit located remotely from the group comprising the holding rod (1), the connecting unit (2), the working unit (3), the monitoring means (13), the power means (14), the sending/receiving means (15), and the at least one measuring means (16).

The invention is further described in detail by way of non-limiting embodiment, and with a reference to the accompanying drawings, where
- Fig. 1: shows a three-dimensional view of a device to collect samples from tree canopies according to the invention,

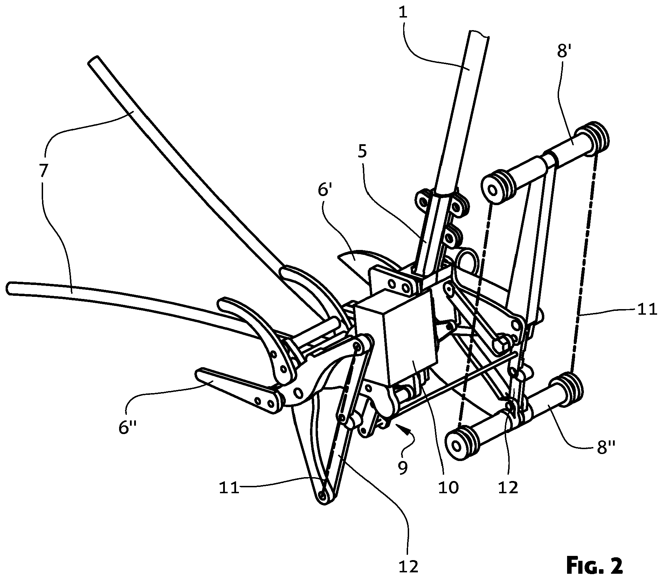

- Fig. 2: shows a partial three-dimensional view of a device of Fig. 1.

A remotely controlled device to collect samples from tree canopies according to the present invention comprises a holding rod 1 the first end thereof being equipped with a connecting unit 2 for connection with an unmanned aerial vehicle, for instance, and a working unit 3 attached to the opposite end of said holding rod. At least one of said connections of the holding rod 1 with the connecting unit 2 and/or the working unit 3 is preferably formed in a manner of an articulated joint. Said holding rod 1 can resemble the form of a single-part rod or as a multi-part rod where individual rigid parts thereof are mutually articulated in a manner that rotation about three spatial axis is enabled. At least one of said articulations and preferably all articulations are formed in a manner known *per se* so as to be remotely controllable. Moreover, said single-part rod 1, or at least one element of a multi-part rod 1 is formed in a telescopic fashion so that it can be extended and/or shortened in the longitudinal direction of the rod 1. In the latter case the single-part rod 1, or at least one element of a multi-part rod 1 is provided with an actuator by means of which said single-part rod 1, or at least one element of a multi-part rod 1 can be extended and, respectively, shortened in a manner of a telescope. Said remotely controlled sample collection device can be remotely controlled by means of a remote control unit (not shown in Fig.), the connection between the remotely controlled sample collection device and the remote control unit being preferably wireless.

Said connecting unit 2 can be connected in a manner known *per se* with a unmanned aerial vehicle, for example, whereby the connecting unit 2 is formed in a manner so that it can be separated from the unmanned aerial vehicle when required. This may happen in particular when the device according to the invention stuck between the branches of the canopy where the samples are to be collected from, or when the unmanned aerial vehicle makes sudden and jerky movements. To this end, said connecting unit 2 comprises a connecting piece 2.1 that is attachable to the unmanned aerial vehicle, by means of threaded connection for example. Furthermore, said connecting unit 2 comprises a holding element 2.2 which on one hand is connected to said holding rod 1, and on the other hand is connected by means of engaging-disengaging means 2.3 to the connecting piece 2.1. Said engaging-disengaging means 2.3 is selected, for example, as a spring loaded gripper, a snap-in gripper, a magnetic gripper, an actuated gripper, and similar. Moreover, said connecting unit 2 is provided with at least one sensor (not shown in Fig.) preferably with a force sensor and an acceleration sensor, which via a disengaging means 4 have effect on releasing the engaging-disengaging means 2.3 when separation of the sample collection device according to the invention from the unmanned aerial vehicle is required. In this manner a disengagement between the connecting piece 2.1 and the holding element 2.2 comes to the effect and, thus, between the connecting unit 2 and the unmanned aerial vehicle. Said disengaging means 4 can be selected as an actuator such as a servomotor and similar. Obviously, the remotely controlled sample collection device according to the invention can also be disengaged from the aerial vehicle manually via a remote controller.

Said sample collection device must be disengaged from the aerial vehicle either automatically or manually in case it is stuck in the branches of the canopy. Hereby, the aerial vehicle can easily be retrieved into the original position, it can land on the ground for example, whereas said sample collection device must be retrieved separately from the aerial vehicle. To this end and as an option, a unit for retrieving the sample collection device is provided on said holding element 2.2. Said retrieving unit comprises a body with a rolled up string therein, said string being connected with the first end thereof to said body of said retrieving unit and having a weight on the other end, and a mechanism to eject said string with the weight. Said string is ejected by means of an ejecting means, such as a spring, a gas cartridge, for instance and similar. The ejection is carried out automatically, with a time delay after the sample collection device have been disengaged from the aerial vehicle. To ensure autonomy of said retrieving unit, after being disengaged from the aerial vehicle, said retrieving unit comprises its own power supply. When said string has been ejected, the weight pulls the string out of said body and towards the ground, thus, advancing through the branches of the canopy is enabled. By pulling said string, a person on the ground that controls the entire process releases the sample collection device and retrieves it for the further use.

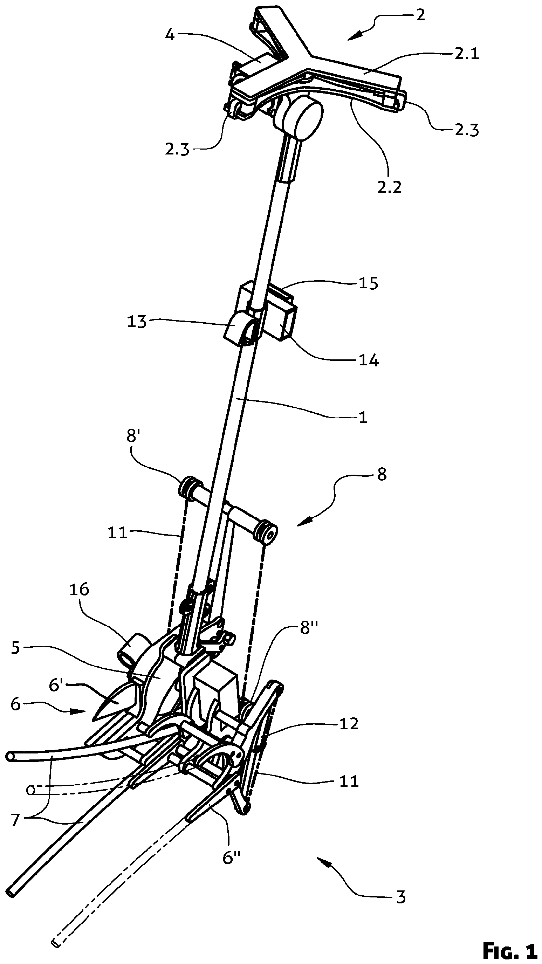

Said working unit 3 comprises a tool mount 5 and at least one tool 6 attached to said mount 5. Said at least one tool 6 can be selected as a cutting means 6' such as scissors, and/or a gripping means 6" such as pliers, and/or similar. Each said means 6', 6" and, respectively, said tool 6 is formed of two mutually movable parts that can be moved close and away with regard to each other. One of each said movable parts of each tool 6, in the present embodiment the lower parts of each tool 6 are mutually rigidly connected in order to exert influence on them simultaneously. In addition, a V-shaped guide 7 for receiving and guiding a branch to be cut into the cutting and/or gripping area of each tool 6 is arranged on said mount 5, preferably in vicinity of the tool 6. Said guide 7 can be formed as a separate element attached directly to the mount 5. Alternate embodiment, however, provides the guide 7 to be formed as an extension of a tip of at least one said tool 6 (shown as dash-dotted line in Fig. 1).

Each tool 6 and, respectively, each means 6', 6" can be manually tensed up by means of a tension mechanism 8, whereby sand tensing up of the tool 6 is carried out on the ground before take off so that the tool 6 resembles a tensed up position when the unmanned aerial vehicle takes off. A motorized form of the tension mechanism 8 is also possible, whereby said tool 6 is not tensed up at the time of the unmanned aerial vehicle take off but is tensed up when the aerial vehicle is already airborne. Such an embodiment of the tension mechanism 8 enables tensioning the tool 6 multiple times, for instance in case the branch has not been cut off successfully at the first attempt. The tensed up tension mechanism 8 can be released by means of a triggering mechanism 9 that can be activated by a triggering means 10 such as a servomotor and similar. Said triggering mechanism 9 can be selected as an articulated system of levers, a Bowden cable (i.e. an inner cable movable relative to a hollow outer cable housing), and similar. Said tension mechanism 8 is formed of a pair of tension handles 8', 8", the first handle 8' thereof being rigidly connected to the first movable part of the tool 6, and the second handle 8" thereof being rigidly connected to the second movable part of the tool 6. A flexible means 11 such as a tension spring for example is arranged between said handles 8', 8", said flexible means 11 can be tensed up by means of said tension mechanism 8. Furthermore, each tool 6 is provided at the remote side of the cutting or gripping tool 6, in essence at the side of some sort of handles of the tool 6, with a pair of holding bars 12 that hold the tool 6 in the open position when the latter is tensed up by means of said tension mechanism 8. Said each pair of holding bars 12 are mutually articulated on one hand, and on the other hand the free ends of the holding bars 12 are articulated with each of said handles of the tool 6. When the tension mechanism 9 is tensed up and, respectively, the tool is open said handles are spaced apart for the amount that the holding bars 12 extend essentially in the same longitudinal axis, thus, resembling a metastable position where the tool 6 is just kept open. At the time of activation the triggering means 10 which effects the triggering mechanism 9 the latter effects said widely open holding bars 12, thus, make the unstable. Upon acting of the flexible means 11 the tool 6 quickly closes, therefore, grips an/or cuts off a branch to be collected from a tree canopy.

In addition, a monitoring means 13 such as a camera to video inspect the device according to the invention, a power means 14 such as a battery to supply power, and a sending/receiving means 15 for communication of the device according to the invention with the person that controls it. Furthermore, at least one measuring means 16 is attached to said mount 5, such as a laser distance meter and similar.

## Claims

1. A remote controlled device to collect samples from tree canopies such as branches, fruits, seeds and similar, comprising a sample collection unit associated with an unmanned aerial vehicle and comprising a holding rod, a working unit attached to the opposite end of the holding rod, a power means for supplying the energy, and a control unit ***characterized in that*** the remote controlled device further comprises a connecting unit (2) attached to the first end of the holding rod (1) to connect said rod (1) with said unmanned aerial vehicle, a monitoring means (13) for video inspection said working unit (3), a sending/receiving means (15) for communication, and at least one measuring means (16), wherein said control unit is located remotely from the group comprising the holding rod (1), the connecting unit (2), the working unit (3), the monitoring means (13), the power means (14), the sending/receiving means (15), and the at least one measuring means (16).

2. A remote controlled device according to claim 1, ***characterized in that*** said holding rod (1) is formed as a single-part rod.

3. A remote controlled device according to claim 1, ***characterized in that*** said holding rod (1) is formed as a multi-part rod.

4. A remote controlled device according to claim 3, ***characterized in that*** individual rigid parts of said multi-part holding rod (1) are mutually articulated by means of an articulated joints that enable rotation about three spatial axes.

5. A remote controlled device according to claims 1 to 4, ***characterized in that*** said single-part holding rod (1) or at least one element of the multi-part holding rod (1) is formed in a telescopic fashion so that it can be extended and/or shortened in the longitudinal direction of the rod (1).

6. A remote controlled device according to any of the preceding claims, ***characterized in that*** said connecting unit (2) which can be articulated with the unmanned aerial vehicle is configured to be separated by means of a disengaging means (4) from the unmanned aerial vehicle, whereby the connecting unit (2) is provided with at least one sensor, preferably at least with a force sensor and an acceleration sensor.

7. A remote controlled device according to claim 6, ***characterized in that*** said disengaging means (4) is selected as an actuator such as a servomotor and similar.

8. A remote controlled device according to any of the preceding claims, ***characterized in that*** said working unit (3) comprises a tool mount (5), at least one tool (6) attached to said mount (5), and a guide (7) for receiving and guiding a branch to be cut into the cutting and/or gripping area of each tool (6), wherein each tool (6) is tensed up by means of a tension mechanism (8) and is released by means of a triggering mechanism (9) activated by a triggering means (10).

9. A remote controlled device according to claim 8, ***characterized in that*** said at least one tool (6) is selected as a cutting means (6') and/or a gripping means (6") and/or similar.

10. A remote controlled device according to claims 8 an 9, ***characterized in that*** said guide (7) for receiving and guiding a branch to be cut resembles a form of a letter V and is arranged directly on said mount (5) in vicinity of the tool (6).

11. A remote controlled device according to claims 8 an 9, ***characterized in that*** said guide (7) is formed as an extension of each tool (6).

## Patentansprüche

1. Ferngesteuerte Vorrichtung, um Proben, wie Zweige, Früchte, Kerne und ähnliches, aus Baumkronen zu sammeln, umfassend eine Probensammeleinheit, die mit einem unbemanntem Luftfahrzeug versehen ist und eine Haltestange, eine Arbeitseinheit, die an dem gegenüberliegenden Ende der Haltestange angebracht ist, eine Energieeinrichtung zum Zuführen von Energie, und eine Steuereinheit umfasst,
**dadurch gekennzeichnet, dass**
die ferngesteuerte Vorrichtung ferner eine Verbindungseinheit (2), die an dem ersten Ende der Haltestange (1) angebracht ist, um die Stange (1) mit dem unbemanntem Luftfahrzeug zu verbinden, eine Überwachungseinrichtung (13) zur Videoüberwachung der Arbeitseinheit (3), eine Sende-/ Empfangseinrichtung (15) zur Kommunikation und mindestens eine Messeinrichtung (16) umfasst, wobei die Steuereinheit entfernt von der Gruppe angeordnet ist, die die Haltestange (1), die Verbindungseinheit (2), die Arbeitseinheit (3), die Überwachungseinrichtung (13), die Energieeinrichtung (14), die Sende- und Empfangseinrichtung (15) und mindestens eine Messeinrichtung (16) umfasst.

2. Ferngesteuerte Vorrichtung nach Anspruch 1, **dadurch gekennzeichnet, dass** die Haltestange (1) als eine einteilige Stange ausgebildet ist.

3. Ferngesteuerte Vorrichtung nach Anspruch 1, **dadurch gekennzeichnet, dass** die Haltestange (1) als eine mehrteilige Stange ausgebildet ist.

4. Ferngesteuerte Vorrichtung nach Anspruch 3, **dadurch gekennzeichnet, dass** einzelne starre Teile der mehrteiligen Haltestange (1) mittels Gelenkverbindungen, die eine Rotation um drei räumliche Achsen ermöglichen, gegenseitig angelenkt sind.

5. Ferngesteuerte Vorrichtung nach Ansprüchen 1 bis 4, **dadurch gekennzeichnet, dass** die einteilige Haltestange (1) oder mindestens ein Bestandteil der mehrteiligen Haltestange (1) teleskopartig ausgebildet ist, sodass sie in longitudinaler Richtung der Stange (1) erweitert und/oder verkürzt werden kann.

6. Ferngesteuerte Vorrichtung nach einem der vorhergehenden Ansprüche, **dadurch gekennzeichnet, dass** die Verbindungseinheit (2), die mit dem unbemannten Luftfahrzeug gelenkig verbunden sein kann, so konfiguriert ist, dass sie mittels einer Entkupplungseinrichtung (4) von dem unbemannten Luftfahrzeug getrennt werden kann, wobei die Verbindungseinheit (2) über mindestens einen Sensor verfügt, vorzugsweise mindestens über einen Kraftsensor und einen Beschleunigungssensor.

7. Ferngesteuerte Vorrichtung nach Anspruch 6, **dadurch gekennzeichnet, dass** die Entkupplungseinrichtung (4) als ein Aktuator wie etwa ein Servomotor oder ähnliches ausgewählt wird.

8. Ferngesteuerte Vorrichtung nach einem der vorhergehenden Ansprüche, **dadurch gekennzeichnet, dass** die besagte Arbeitseinheit (3) eine Werkzeughalterung (5), mindestens ein Werkzeug (6), das an der Halterung (6) angebracht ist, und eine Führung (7) zum Aufnehmen und Führen eines zu schneidenden Zweigs in den Schneid- und/oder Greifbereich jedes Werkzeugs (6), wobei jedes Werkzeug (6) durch einen Zugmechanismus (8) gespannt wird und mittels eines Auslösemechanismus (9), der durch eine Auslöseeinrichtung (10) aktiviert wird, freigegeben wird.

9. Ferngesteuerte Vorrichtung nach Anspruch 8, **dadurch gekennzeichnet, dass** mindestens ein Werkzeug (6) als eine Schneideinrichtung (6') und/oder eine Greifeinrichtung (6") und/oder ähnliches ausgewählt wird.

10. Ferngesteuerte Vorrichtung nach Anspruch 8 und 9, **dadurch gekennzeichnet, dass** die Führung (7) zum Aufnehmen und Führen eines zu schneidenden Zweigs der Form eines Buchstabens V ähnelt und unmittelbar auf der Werkzeughalterung (5) in der Nähe von dem Werkzeug (6) angeordnet ist.

11. Ferngesteuerte Vorrichtung nach Anspruch 8 und 9, **dadurch gekennzeichnet, dass** die Führung (7) als eine Verlängerung jedes Werkzeugs (6) ausgebildet ist.

## Revendications

1. Dispositif télécommandé pour collecter des échantillons à partir de canopées d'arbres, tels que des branches, des fruits, des graines et similaires, comprenant une unité de collecte d'échantillon associée à un véhicule aérien sans pilote et comprenant une tige de maintien, une unité de travail fixée à l'extrémité opposée de la tige de maintien, un moyen d'alimentation pour fournir de l'énergie, et une unité de commande, **caractérisé en ce que** le dispositif télécommandé comprend en outre une unité de liaison (2) fixée à la première extrémité de la tige de maintien (1) pour relier ladite tige (1) audit véhicule aérien sans pilote, un moyen de surveillance (13) pour une inspection vidéo de ladite unité de travail (3), un moyen d'envoi/réception (15) pour communication, et au moins un moyen de mesure (16), ladite unité de commande étant située à distance du groupe comprenant la tige de maintien (1), l'unité de liaison (2), l'unité de travail (3), le moyen de surveillance (13), le moyen d'alimentation (14), le moyen d'envoi/réception (15), et l'au moins un moyen de mesure (16).

2. Dispositif télécommandé selon la revendication 1, **caractérisé en ce que** ladite tige de maintien (1) est formée sous la forme d'une tige en une seule partie.

3. Dispositif télécommandé selon la revendication 1, **caractérisé en ce que** ladite tige de maintien (1) est formée sous la forme d'une tige à multiples parties.

4. Dispositif télécommandé selon la revendication 3, **caractérisé en ce que** des parties rigides individuelles de ladite tige de maintien à multiples parties (1) sont mutuellement articulées au moyen de joints articulés qui permettent une rotation autour de trois axes de l'espace.

5. Dispositif télécommandé selon les revendications 1 à 4, **caractérisé en ce que** ladite tige de maintien à une seule partie (1) ou au moins un élément de la tige de maintien à multiples parties (1) est formé d'une manière télescopique de façon à pouvoir être étendu et/ou raccourci dans la direction longitudinale de la tige (1).

6. Dispositif télécommandé selon l'une quelconque des revendications précédentes, **caractérisé en ce que** ladite unité de liaison (2) qui peut être articulée au véhicule aérien sans pilote est configurée pour être séparée du véhicule aérien sans pilote au moyen d'un moyen de désengagement (4), ce par quoi l'unité de liaison (2) comporte au moins un capteur, de préférence au moins un capteur de force et un capteur d'accélération.

7. Dispositif télécommandé selon la revendication 6, **caractérisé en ce que** ledit moyen de désengagement (4) est sélectionné pour être actionneur, tel qu'un servomoteur et similaire.

8. Dispositif télécommandé selon l'une quelconque des revendications précédentes, **caractérisé en ce que** ladite unité de travail (3) comprend un support d'outil (5), au moins un outil (6) fixé audit support (5), et un guide (7) pour recevoir et guider une branche à couper jusque dans la zone de coupe et/ou de saisie de chaque outil (6), chaque outil (6) étant tendu au moyen d'un mécanisme de tension (8) et étant libéré au moyen d'un mécanisme de déclenchement (9) activé par un moyen de déclenchement (10).

9. Dispositif télécommandé selon la revendication 8, **caractérisé en ce que** ledit au moins un outil (6) est sélectionné pour être un moyen de coupe (6') et/ou un moyen de saisie (6") et/ou similaire.

10. Dispositif télécommandé selon les revendications 8 et 9, **caractérisé en ce que** ledit guide (7) pour recevoir et guider une branche à couper ressemble à une forme d'une lettre V et est agencé directement sur ledit support (5) au voisinage de l'outil (6).

11. Dispositif télécommandé selon les revendications 8 et 9, **caractérisé en ce que** ledit guide (7) est formé sous la forme d'une extension de chaque outil (6).
